# EUROPÄISCHE PATENTSCHRIFT

(11) **EP 3 792 794 B1**
(45) Veröffentlichungstag und Bekanntmachung des Hinweises auf die Patenterteilung: **22.06.2022**
(21) Anmeldenummer: 20191876.0
(22) Anmeldetag: 20.08.2020
(51) Int. Cl.: H04L 9/40, G06F 21/32

(54) **FINGERABDRUCKERFASSUNGSGERÄT**
FINGERPRINT DETECTION DEVICE
APPAREIL DE CAPTURE D'EMPREINTES

(30) Priorität: 10.09.2019 DE 102019124270
(43) Veröffentlichungstag der Anmeldung: 17.03.2021
(73) Patentinhaber: Bundesdruckerei GmbH, 10969 Berlin (DE)
(72) Erfinder: MORGNER, Frank, 15537 Grünheide (DE); BASTIAN, Paul, 10243 Berlin (DE); KRAUS, Micha, 10827 Berlin (DE); TIETKE, Markus, 12439 Berlin (DE); BÖSCH, Christoph, 14558 Nuthetal (DE)
(74) Vertreter: Richardt Patentanwälte PartG mbB

(56) Entgegenhaltungen:
- WO-A1-2011/042349
- US-A1- 2004 146 186
- US-A1- 2012 033 807
- US-A1- 2018 373 857
- CAPPELLI R ET AL: "Synthetic fingerprint-database generation", PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, Bd. 3, 11. August 2002 (2002-08-11), Seiten 744-747, XP010613732, DOI: 10.1109/ICPR.2002.1048096 ISBN: 978-0-7695-1695-0

## Beschreibung

Die Erfindung betrifft ein Fingerabdruckerfassungsgerät zur Authentifizierung eines Nutzers gegenüber einem Computer.

Aus WO2011/042349A1 ist ein Dokument mit einem Fingerabdrucksensor bekannt. Bei dem Dokument kann es sich um ein Wert- oder Sicherheitsdokument, wie zum Beispiel ein ID-Dokument, handeln.

Der internationale Standard ISO-IEC7816-11 beschreibt "Personal verification through wiremetric methods" für identification cards - integrated circuit cards.

Der Erfindung liegt demgegenüber die Aufgabe zugrunde, ein verbessertes Fingerabdruckerfassungsgerät, ein System mit einem Fingerabdruckerfassungsgerät sowie entsprechende Verwendungen von Fingerabdruckerfassungsgeräten zu schaffen.

Die der Erfindung zugrundeliegenden Aufgaben werden jeweils mit den Merkmalen der unabhängigen Patentansprüche gelöst.

Unter einem "Fingerabdruckerfassungsgerät" wird insbesondere ein stationäres oder tragbares Gerät verstanden, welches mit einem Fingerabdrucksensor zur Erfassung des Fingerabdrucks einer Person, d.h. eines Nutzers eines Computers, ausgerüstet ist.

Unter einem "synthetischen Fingerabdruck" wird hier ein von einem Fingerabdruckgenerator erzeugter Fingerabdruck verstanden, der nicht von einem realen Finger eines Nutzers abgenommen wird, sondern durch den Fingerabdruckgenerator durch Ausführung eines Generator-Algorithmus berechnet wird. Die Erzeugung von synthetischen Fingerabdrücken durch algorithmische Berechnung ist an sich aus dem Stand der Technik bekannt, wie z. B. aus
- R. Cappelli, A. Erol, D. Maio and D. Maltoni, "Synthetic Fingerprint-image Generation", in proceedings 15th International Conference on Pattern Recognition (ICPR2000), Barcelona, vol.3, pp.475-478, September 2000.
- R. Cappelli, D. Maio and D. Maltoni, "Synthetic Fingerprint-Database Generation", in proceedings 16th International Conference on Pattern Recognition (ICPR2002), Quebec City, vol.3, pp.744-747, August 2002.
- R. Cappelli, "SFinGe: an Approach to Synthetic Fingerprint Generation", in proceedings International Workshop on Biometric Technologies (BT2004), Calgary, Canada, pp.147-154, June 2004. Invited paper.
- R. Cappelli, D. Maio and D. Maltoni, "An Improved Noise Model for the Generation of Synthetic Fingerprints", in proceedings Eighth International Conference on Control, Automation, Robotics and Vision (ICARCV2004), Kunming, China, December 2004.

Die Verwendung von synthetischen Fingerabdrücken dient im Stand der Technik zur Erzeugung von Fingerabdruck-Datenbanken, die solche synthetischen Fingerabdrücke beinhalten, um Fingerabdruckerkennungsverfahren zu testen, ohne eine große Anzahl realer Fingerabdrücke aufzunehmen.

Unter einem "Fingerabdruckgenerator" wird hier ein Programmmodul zur Erzeugung eines synthetischen Fingerabdrucks verstanden, wobei hierzu ein beliebiges Verfahren zur Erzeugung eines synthetischen Fingerabdrucks basieren auf einem Zufallswert verwendet werden kann.

Das Verfahren kann deterministisch sein oder selbst eine zufällige Komponente beinhalten.

Unter einem "deterministischen Fingerabdruckgenerator" wird hier ein Fingerabdruckgenerator verstanden, der einen deterministischen Algorithmus zur Erzeugung eines synthetischen Fingerabdrucks implementiert. Hierunter wird ein Algorithmus zur Erzeugung eines synthetischen Fingerabdrucks verstanden, der bei gleichem Eingabeparameter, d.h. demselben Zufallswert, immer den identischen synthetischen Fingerabdruck liefert.

Unter einem "Prozessor" werden hier Logik-Schaltkreise verstanden, die zur Durchführung von Programminstruktionen geeignet sind. Ein "Prozessor" kann als einzelner physischer Prozessor, d. h. als eine monolithische Baueinheit mit einem oder mehreren Prozessorkernen, und/oder durch Zusammenschaltung verschiedener diskreter Bauelemente realisiert werden.

Unter einem "Nutzer-Code" wird hier ein Code verstanden, der einer Kombination des Nutzers und eines Computers, auf dem der Nutzer ein Nutzerkonto hat, eindeutig zugeordnet ist. Hat derselbe Nutzer auf einem anderen Computer ebenfalls ein Nutzerkonto, so ist demselben Nutzer auf dem anderen Computer ein anderer Nutzer-Code zugeordnet, der von dem Nutzer-Code auf dem ersten Computer unterschiedlich ist. Eine solche Vergabe von Nutzer-Codes erfolgt in verschiedenen modernen Betriebssystemen, insbesondere Windows 10, MacOS oder Linux.

Ausführungsformen der Findung sind besonders vorteilhaft, da über die Kommunikationsschnittstelle nicht ein Abbild des realen Fingerabdrucks des Nutzers an den Computer übertragen wird, sondern ein synthetischer Fingerabdruck, der keinerlei Korrelation zu dem realen Fingerabdruck des Nutzers aufweist, da der synthetische Fingerabdruck ausgehend von einem Zufallswert, den der Zufallsgenerator liefert, berechnet wird. Dieser synthetische Fingerabdruck ist dem Nutzer-Code des Nutzers und nicht dem Nutzer selbst zugeordnet, sodass ein solcher synthetischer Fingerabdruck auch nur gegenüber dem einen Computer zur Authentifizierung erfolgreich verwendet werden kann.

Dies hat den weiteren Vorteil, dass im Falle einer Korrumpierung eines der Computer durch Schadsoftware einem Angreifer im schlimmsten Fall nur der synthetische Fingerabdruck, der dem Nutzer auf dem korrumpierten Computer zugeordnet ist, ausgespäht werden kann, aber nicht die synthetischen Fingerabdrücke, die dem Nutzer auf anderen oder weiteren Computern zugeordnet sind. Vorzugsweise wird der synthetischer Fingerabdruck also in einem nicht-flüchtigen Speicher des Fingerabdruckerfassungsgeräts nicht oder nur kurzfristig gespeichert, sondern nur in einem volatilen Speicher z.B. des Prozessors, beispielsweise in dessen Arbeitsspeicher.

Im Weiteren werden Ausführungsformen der Erfindung mit Bezugnahme auf die Zeichnungen näher erläutert. Es zeigen
Fig. 1 Eine Ausführungsform des Fingerabdruckerfassungsgeräts in seiner Verwendung zur Einrichtung der Authentifizierung eines Nutzers,
Fig, 2 Die Ausführungsform des Fingerabdruckerfassungsgeräts gemäß Fig. 1 bei Verwendung des Fingerabdruckerfassungsgeräts zur Authentifizierung eines Nutzers,
Fig. 3A Das Abbild eines realen Fingerabdrucks, welches von einem Fingerabdrucksensor erfasst ist.
Fig. 3 B Einen synthetischen Fingerabdruck.

Im Weiteren werden einander entsprechende Elemente der nachfolgenden Ausführungsformen mit gleichen Bezugszeichen gekennzeichnet.

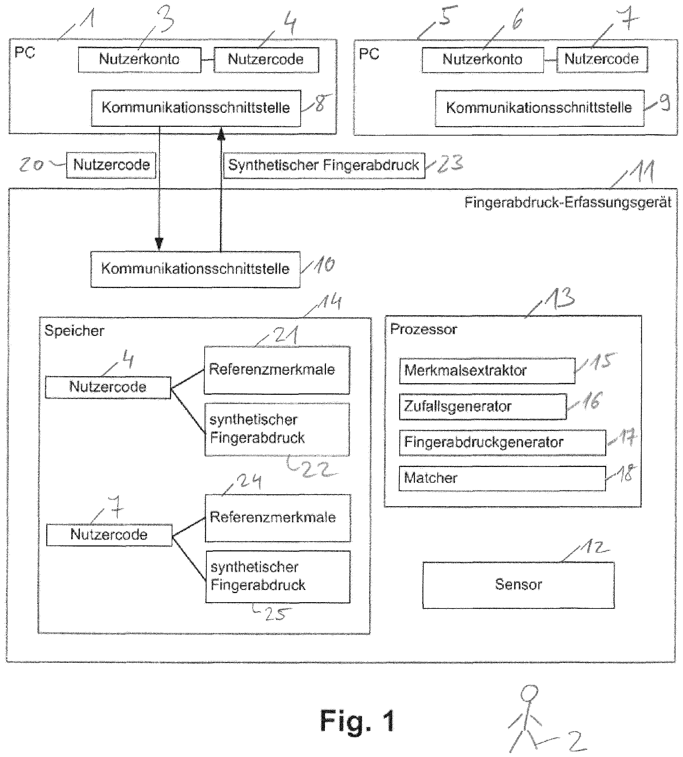

Die Fig. 1 zeigt einen Computer 1, wie zum Beispiel einen Personalcomputer (PC) mit einem Windows 10 Betriebssystem oder einem anderen Betriebssystem, wie zum Beispiel Mac OS oder Linux. Der Computer 1 kann auch als Steuerungsgerät einer Vorrichtung ausgebildet sein. Bei der Vorrichtung kann es sich um ein Gerät handeln, welches von dem Steuerungsgerät gesteuert wird. Beispielsweise kann es sich bei der Vorrichtung um eine Zugangskontrollvorrichtung zur Kontrolle des Zugangs in einen räumlichen Bereich handeln.

Ein Nutzer 2 ist auf dem Computer 1 durch das Betriebssystem des Computers 1 oder ein Anwendungsprogramm des Computers 1 registriert, sodass für den Nutzer 2 - z.B. im Falle von Windows 10 - ein Nutzerkonto 3 auf dem Computer 1 existiert, welches dem Nutzer 2 einen Nutzercode 4 zuordnet. Der Nutzercode 4 ist dabei der Kombination von Computer 1 und Nutzer 2 eindeutig zugeordnet. Ist derselbe Nutzer 2 auf einem weiteren Computer 5 ebenfalls beispielsweise durch ein Nutzerkonto 6 registriert, so hat dieser selbe Nutzer 2 auf dem Computer 5 einen Nutzercode 7, der von dem Nutzercode 4 verschieden ist, obwohl es sich um den gleichen Nutzer 2 handelt.

Entsprechendes gilt für weitere Computer, auf denen der Nutzer 2 registriert sein kann.

Die Computer 1 und 5 haben jeweils eine Kommunikationsschnittstelle 8 bzw. 9. Die Kommunikationsschnittstellen 8, 9 sind jeweils zur Kommunikation mit einer entsprechenden Kommunikationsschnittstelle 10 eines Fingerabdruckerfassungsgeräts 11 ausgebildet. Die Kommunikationsschnittstellen 8, 9, 10 können kontaktbehaftet, beispielsweise zur Kommunikation über einen Computerbus, insbesondere als USB-Schnittstellen ausgebildet sein oder für eine kontaktlose direkte Kommunikation über ein Nahfeld, insbesondere NFC oder Bluetooth. Unter einer "direkten" Kommunikation wird dabei eine Kommunikation ohne Zwischenschaltung eines Netzwerks verstanden.

Das Fingerabdruckerfassungsgerät 11 hat einen Fingerabdrucksensor 12, einen Prozessor 13 und einen elektronischen Speicher 14. Vorzugsweise handelt es sich bei dem elektronischen Speicher 14 um einen nicht-volatilen Speicher.

Die verschiedenen Komponenten des Fingerabdruckerfassungsgeräts 11 können unterschiedliche Integrationsgrade aufweisen, beispielsweise können diese in einem einzigen Chip integriert sein. Es können auch mehrere diskrete Bauelemente vorhanden sein, die durch entsprechende Zusammenschaltung die Funktionalität der betreffenden Komponenten ergeben. Insbesondere kann das Fingerabdruckerfassungsgerät 11 ein oder mehrere Prozessorkerne aufweisen sowie ein oder mehrere Speicherkomponenten. Vorzugsweise ist der Speicher 14 als nichtflüchtiger elektronischer Speicher ausgebildet, sodass der Inhalt des Speichers 14 erhalten bleibt, auch wenn keine Energieversorgung zur Verfügung steht.

Das Fingerabdruckerfassungsgerät 11 kann beispielsweise als USB-Stick oder als Chipkarte ausgebildet sein. Insbesondere kann das Fingerabdruckerfassungsgerät 11 integraler Bestandteil eines elektronischen Ausweisdokuments sein. Alternativ ist das Fingerabdruckerfassungsgerät 11 als batteriebetriebenes Mobilfunkgerät, wie zum Beispiel als Smartphone, ausgebildet.

Der Prozessor 13 des Fingerabdruckerfassungsgeräts 11 dient zur Ausführung von Programmmodulen 15, 16, 17 und 18.

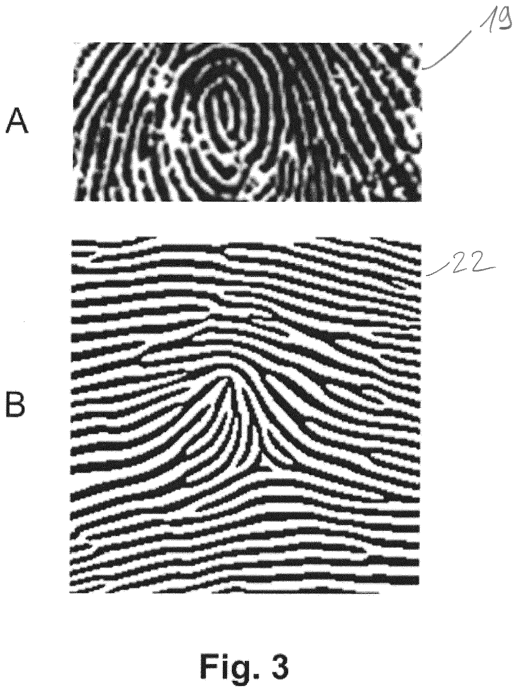

Bei dem Programmodul 15 handelt es sich um einen Merkmalsextraktor zur Extrahierung von Referenzmerkmalen aus einem von dem Fingerabdrucksensor 12 erfassten Abbild 19 (vgl. Fig. 3a) eines Fingerabdrucks des Nutzers 2. Die so extrahierten Merkmale werden entweder als Referenzmerkmale 21 in dem Speicher 14 gespeichert oder zur Prüfung der Authentizität des erfassten Fingerabdrucks verwendet.

Bei dem Programmodul 16 handelt es sich um einen Zufallsgenerator zur Erzeugung eines Zufallswerts. Anstelle durch das Programmodul 16 kann der Zufallsgenerator auch vollständig als Hardwareschaltung oder durch eine Mischung von Hardware und Software realisiert werden. Insbesondere kann für die Erzeugung des Zufallswerts ein unvorhersehbarer physikalischer Prozess, z.B. thermisches Rauschen, verwendet werden; entsprechende Prozessoren mit integriertem Hardware und/oder softwarebasiertem Zufallsgenerator sind an sich aus dem Stand der Technik bekannt. Insbesondere kann der Zufallsgenerator so ausgebildet sein, dass er die Zufallswerte basierend auf weißem Rauschen erzeugt. Vorzugsweise ist der Zufallsgenerator als binary symmetric source ausgebildet. In diesem Fall ist die Wahrscheinlichkeit, dass in dem von dem Zufallsgenerator gelieferten Zufallswert auf eine logische Null eine logische Eins folgt, immer 0.5 und genauso, dass auf eine logische Eins eine logische Null folgt, immer 0.5, so dass man einen perfekt zufälligen Wert erhält.

Das Programmodul 17 dient zur Erzeugung eines synthetischen Fingerabdrucks. Es ist so ausgebildet, dass es als Eingangsparameter für den durch das Programmodul 17 implementierten Algorithmus zur Erzeugung des synthetischen Fingerabdrucks ausschließlich den von dem Zufallsgenerator 16 erzeugten Zufallswert erhält, um jede Korrelation des synthetischen Fingerabdrucks und des realen Fingerabdrucks des Nutzers zu vermeiden. Insbesondere soll so prinzipiell ausgeschlossen werden, dass mit welcher Rechenleistung auch immer, aus dem synthetischen Fingerabdruck auf den realen Fingerabdruck rückgeschlossen werden kann. Beispielsweise implementiert das Programmodul 17 einen deterministischen Algorithmus zur Erzeugung eines synthetischen Fingerabdrucks. Hierunter wird ein Algorithmus zur Erzeugung eines synthetischen Fingerabdrucks verstanden, der bei gleichem Eingabeparameter, d.h. demselben Zufallswert, immer den identischen synthetischen Fingerabdruck liefert.

Das Programmodul 18 implementiert einen Matcher zum Vergleich, der aus einem erfassten Fingerabdruck extrahierten Merkmale mit den gespeicherten Referenzmerkmalen.

Um die Authentifizierung des Nutzers 2 gegenüber dem Computer 1 mittels Fingerabdruck einzurichten, wird beispielsweise wie folgt vorgegangen:
Der Computer 1 sendet von seiner Kommunikationsschnittstelle 8 ein erstes Kommando 20 mit dem Nutzercode 4; dieses Kommando 20 wird von der Kommunikationsschnittstelle 10 des Fingerabdruckerfassungsgeräts 11 empfangen. Bei einer Implementierung gemäß ISO/IEC7816-11 kann es sich bei dem Kommando 20 um ein PERFORM BIOMETRIC OPERATION (PBO) Kommando mit der Funktion CAPTURE handeln.

Zur Einrichtung der Authentifizierung mittels Fingerabdruck legt der Nutzer 2 einen seiner Finger auf den Fingerabdrucksensor 2 auf. Hierdurch wird das Fingerabdruckbild 19 (vgl. Fig. 3 a) durch das Fingerabdruckerfassungsgerät 11 erfasst. Durch Ausführung des Programmoduls 15 werden dann Referenzmerkmale 21 aus dem Fingerabdruckbild 19 extrahiert und in dem elektronischen Speicher 14 gespeichert, wobei diese Abspeicherung mit dem Nutzercode 4 als Zugriffsschlüssel erfolgt, um später mithilfe des Nutzercodes 4 die Referenzmerkmale 21 aus dem Speicher 14 lesen zu können.

Mithilfe des Programmoduls 16 bzw. - je nach Ausführungsform - durch einen Hardware-Zufallsgenerator, wird ein Zufallswert erzeugt, der in das Programmodul 17 eingegeben wird, um einen synthetischen Fingerabdruck 22 (vgl. Fig. 3 b) zu erzeugen. Der synthetische Fingerabdruck 22 wird in dem Speicher 14 ebenfalls mit dem Nutzercode 4 als Zugriffsschlüssel gespeichert.

Der synthetische Fingerabdruck 22 wird durch das Fingerabdruckerfassungsgerät 11 von seiner Kommunikationsschnittstelle 10 als Antwort 23 auf das Kommando 20 gesendet und von der Kommunikationsschnittstelle 8 des Computers 1 empfangen. Von dem Computer 1 wird dann die Authentifizierung des Nutzers 2 mithilfe des empfangenen synthetischen Fingerabdrucks 22 eingerichtet, und zwar genau in derselben Art und Weise, als wäre nicht der synthetische Fingerabdruck 22, sondern das Fingerabdruckbild 19 empfangen worden, d.h. der Computer 1 "merkt" nicht, dass es sich bei dem empfangenen Fingerabdruck nicht um einen realen, sondern einen synthetischen handelt.

Für den Fall, dass der Nutzer 2 auch für den Computer 5 eine Authentifizierung mittels Fingerabdruck wünscht, kann bezüglich des Computers 5 in analoger Art und Weise vorgegangen werden. Wird also das Kommando 20 mit dem Nutzercode 7 von dem Fingerabdruckerfassungsgerät 11 empfangen, so werden erneut Referenzmerkmale 24 erfasst und in dem Speicher 14 mit dem Nutzercode 7 als Zugriffsschlüssel gespeichert sowie auch ein weiterer synthetischer Fingerabdruck 25. Entsprechend kann für eine im Prinzip unbegrenzte Anzahl weiterer Computer vorgegangen werden.

Von besonderem Vorteil ist hier, dass eine eigene Registrierung des Nutzers 2 gegenüber dem Fingerabdruckerfassungsgerät 11 nicht erforderlich ist. Dies ermöglicht maximale Flexibilität hinsichtlich der Verwendung des Fingerabdruckerfassungsgeräts 11. Beispielsweise kann der Nutzer 2 für unterschiedliche Computer unterschiedliche seiner Finger für die Authentifizierung registrieren. Ferner kann das Fingerabdruckerfassungsgerät 11 auch von mehreren Nutzern verwendet werden. Diese verschiedenen Nutzer müssen sich lediglich merken, für welchen der Computer sie welchen ihrer Finger für die Registrierung verwendet haben, wobei natürlich ein Nutzer auch immer denselben Finger bei den verschiedenen Computern für seine Registrierung verwenden kann, da ja für jede Einrichtung der Authentifizierung mittels Fingerabdruck auf jedem der Computer immer wieder aufs Neue die Referenzmerkmale erfasst werden.

In einer weiteren Ausführungsform kann das Fingerabdruckerfassungsgerät 11 wie folgt ausgebildet sein: Anstelle oder zusätzlich zu dem synthetischen Fingerabdruck 22 wird in dem Speicher 14 der Zufallswert gespeichert, der zur Erzeugung des synthetischen Fingerabdrucks 22 dient und zwar mit dem Nutzercode 4 als Zugriffsschlüssel. Diese Speicherung des Zufallswerts kann vor oder nach der Erzeugung des synthetischen Fingerabdrucks 22 erfolgen.

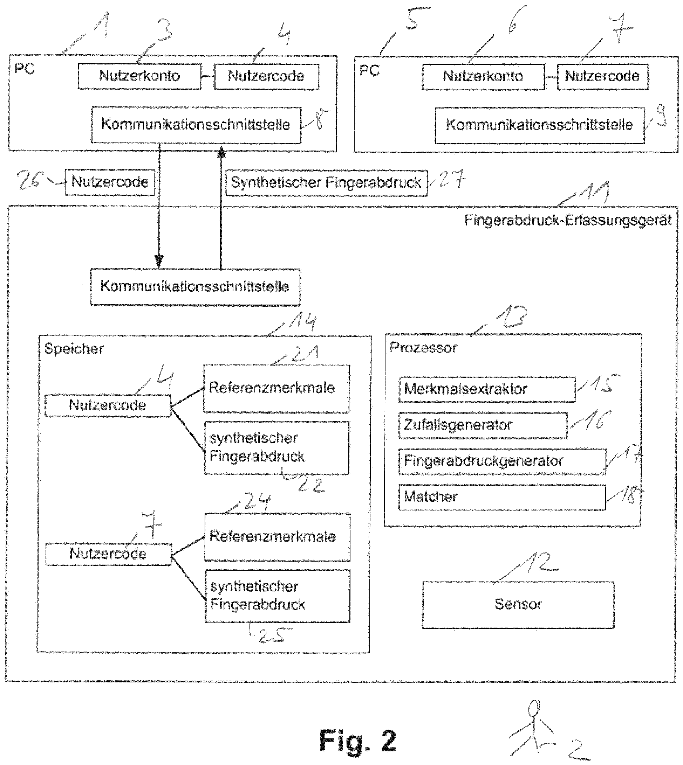

Die Fig. 2 zeigt die Verwendung des Fingerabdruckerfassungsgeräts 11 zur Authentifizierung des Nutzers 2 gegenüber dem Computer 1, nach dem die Einrichtung der Authentifizierung gemäß Fig. 1 erfolgt ist. Der Computer 1 sendet eine Authentifizierungsanforderung in Form eines Kommandos 26 von seiner Kommunikationsschnittstelle 8, welches von der Kommunikationsschnittstelle 10 des Fingerabdruckerfassungsgeräts 11 empfangen wird.

Das Kommando 26 beinhaltet den Nutzercode 4. Beispielsweise kann das Kommando 26 von dem Betriebssystem des Computers 1 für das Einloggen des Nutzers 2 auf dem Computer 1 gesendet werden oder durch ein Anwendungsprogramm des Computers 1 gegenüber dem sich der Nutzer 2 mithilfe seines Fingerabdrucks biometrisch authentifizieren soll. Insbesondere kann es sich bei dem Kommando 26 um ein PBO-Kommando gemäß ESO/IEC7816-11 handeln.

Von dem Nutzer 2 wird dann über den Fingerabdrucksensor 12 ein Fingerabdruckbild erfasst. Durch Ausführung des Programmoduls 15 werden Vergleichsmerkmale aus dem erfassten Fingerabdruckbild extrahiert. Durch Ausführung des Programmoduls 18 werden dann die aus dem erfassten Fingerabdruckbild extrahierten Vergleichsmerkmale mit den Referenzmerkmalen verglichen. Hierzu greift der Prozessor 13 auf den Speicher 14 zu, um mithilfe des mit dem Kommando 26 empfangenen Nutzercode 4, die dem Nutzercode 4 zugeordneten Referenzmerkmale 21 zu lesen.

Die gelesenen Referenzmerkmale 21 werden durch Ausführung des Programmoduls 18 dann mit dem extrahierten Vergleichsmerkmalen des erfassten Fingerabdruckbilds auf Übereinstimmung geprüft. Liegt eine hinreichende Übereinstimmung vor, so liest der Prozessor 13 aus dem Speicher 14 den dem betreffenden Nutzercode, hier dem Nutzercode 4, zugeordneten synthetischen Fingerabdruck 22.

Das Fingerabdruckerfassungsgerät 11 antwortet dann auf das Kommando 26 mit der Antwort 27, die den synthetischen Fingerabdruck 22 beinhaltet. Der Computer 1 verwendet den empfangenen synthetischen Fingerabdruck 22 zur Authentifizierung des Nutzers 2, in genau gleicher Art und Weise, als handele es sich um einen realen Fingerabdruck.

Nach einer weiteren Ausführungsform ist das Fingerabdruckerfassungsgerät 11 wie folgt ausgebildet: Die gelesenen Referenzmerkmale 21 werden wie bei der obigen Ausführungsform durch Ausführung des Programmoduls 18 mit dem extrahierten Vergleichsmerkmalen des erfassten Fingerabdruckbilds auf Übereinstimmung geprüft. Liegt eine hinreichende Übereinstimmung vor, so liest der Prozessor 13 aus dem Speicher 14 den dem betreffenden Nutzercode, hier dem Nutzercode 4, zugeordneten Zufallswert. Der ausgelesene Zufallswert wird dann in das Programmodul 17 eingegeben, um den synthetischen Fingerabdruck 22 (vgl. Fig. 3 b) aufs Neue zu erzeugen. Das Fingerabdruckerfassungsgerät 11 antwortet dann auf das Kommando 26 mit der Antwort 27, die den aufs Neue erzeugten synthetischen Fingerabdruck 22 beinhaltet. Der Computer 1 verwendet den empfangenen synthetischen Fingerabdruck 22 zur Authentifizierung des Nutzers 2, in genau gleicher Art und Weise, als handele es sich um einen realen Fingerabdruck.

Hierbei ist besonders vorteilhaft, dass an dem existenten Betriebssystem keinerlei Änderung vorgenommen werden muss und keine zusätzliche Software installiert werden muss. Beispielsweise sind Ausführungsformen des erfindungsgemäßen Fingerabdruckerfassungsgeräts 11 ohne Weiteres mit Windows 10 oder einem anderen modernen Betriebssystem verwendbar, ohne dass es irgendwelcher Änderungen des Betriebssystems oder der Installation spezieller Software oder Hardware bedürfte.

Von weiterem besonderen Vorteil ist, dass die Handhabung des Fingerabdruckerfassungsgeräts 11 für den Nutzer vollständig intuitiv ist und für die Handhabung des Fingerabdruckerfassungsgeräts 11 keinerlei besondere Kenntnisse erforderlich sind.

Von besonderem Vorteil ist ferner die verbesserte Sicherheit. Wird zum Beispiel der synthetische Fingerabdruck 22 bei der Übertragung von der Kommunikationsschnittstelle 10 an die Kommunikationsschnittstelle 8 ausgespäht oder ist der Computer 11 durch SchadSoftware korrumpiert, so betrifft dies nicht den Computer 5 oder weitere Computer, da der Nutzer 2 zur Authentifizierung gegenüber dem Computer 5 und weiteren Computern jeweils verschiedene synthetische Fingerabdrücke hat, die in dem Speicher 14 unter dem jeweiligen Nutzercode gespeichert sind.

In der weiteren Ausführungsform ist besonders vorteilhaft, dass der synthetische Fingerabdruck nicht in dem Fingerabdruckerfassungsgerät 11 gespeichert sein muss, und daher auch nicht z.B. über eine Hardwareattacke ausgelesen werden kann. Auch wenn es gelänge den gespeicherten Zufallswert auszulesen, so müsste dann ein Angreifer zusätzlich Kenntnis von dem zu verwendenden Algorithmus zur Erzeugung des synthetischen Fingerabdrucks haben, um diesen rekonstruieren zu können.

Die Fig. 3 zeigt das Fingerabdruckbild 19 eines realen Fingerabdrucks, welches von dem Fingerabdrucksensor 12 erfasst wurde und die Fig. 3 B zeigt den synthetischen Fingerabdruck 22, der von dem Programmodul 17 basierend auf dem Zufallswert erzeugt wurde. Von besonderem Vorteil ist hier, dass der synthetische Fingerabdruck 22 größer ist als die von dem Fingerabdrucksensor 12 erfasste Fingerabdruckfläche, wie sich aus dem Vergleich der Fig. 3 A und 3 B ergibt. Ferner ist auch die Qualität des synthetischen Fingerabdrucks 22 wesentlich besser als die des Fingerabdruckbildes 19 des realen Fingers, da der synthetische Fingerabdruck 22 berechnet wurde und somit Imperfektionen, die bei der realen Erfassung des Fingerabdrucks mittels eines Fingerabdrucksensors auftreten, hier nicht vorliegen können. Der synthetische Fingerabdruck 22 ermöglicht daher aufgrund seiner größeren Fläche und damit der größeren Anzahl von für die Erkennung des Nutzers zur Verfügung stehenden Merkmalen sowie seiner besseren optischen Qualität eine sicherere Authentifizierung des Nutzers.

**Bezugszeichenliste**

| | |
|---|---|
| Computer | 1 |
| Nutzer | 2 |
| Nutzerkonto | 3 |
| Nutzercode | 4 |
| Computer | 5 |
| Nutzerkonto | 6 |
| Nutzercode | 7 |
| Kommunikationsschnittstelle | 8 |
| Kommunikationsschnittstelle | 9 |
| Kommunikationsschnittstelle | 10 |
| Fingerabdruckerfassungsgerät | 11 |
| Fingerabdrucksensor | 12 |
| Prozessor | 13 |
| Speicher | 14 |
| Programmodul | 15 |
| Programmodul | 16 |
| Programmodul | 17 |
| Programmodul | 18 |
| Fingerabdruckbild | 19 |
| Kommando | 20 |
| Referenzmerkmale | 21 |
| Synthetischer Fingerabdruck | 22 |
| Antwort | 23 |
| Referenzmerkmale | 24 |
| Synthetischer Fingerabdruck | 25 |
| Kommando | 26 |
| Antwort | 27 |

## Patentansprüche

1. Fingerabdruckerfassungsgerät mit
- einem Fingerabdrucksensor (12) zur Erfassung eines Fingerabdruckbildes (19) eines Nutzers (2),
- einem elektronischen Speicher (14),
- einem Zufallsgenerator (16) zur Erzeugung eines Zufallswerts,
- einem Fingerabdruckgenerator (17) zur Erzeugung eines synthetischen Fingerabdrucks,
- einer Kommunikationsschnittstelle (10) zur Kommunikation mit einem Computer (1, 5),
- einem Prozessor (13), der zur Durchführung von Programminstruktionen (15, 16, 17, 18) so konfiguriert ist, dass
aufgrund des Empfangs eines ersten Kommandos (20) zur Einrichtung der Authentifizierung des Nutzers gegenüber dem Computer mittels Fingerabdruck die folgenden Schritte durchgeführt werden:
- Erfassung des Fingerabdrucks des Nutzers durch den Fingerabdrucksensor,
- Merkmalsextraktion zur Extrahierung von Referenzmerkmalen (21, 24) aus dem erfassten Fingerabdruckbild,
- Speicherung der Referenzmerkmale in dem elektronischen Speicher,
- Erzeugung eines Zufallswerts mithilfe des Zufallsgenerators,
- Eingabe des Zufallswerts in den Fingerabdruckgenerator,
- Erzeugung eines synthetischen Fingerabdrucks (22, 25) durch den Fingerabdruckgenerator mit nur dem Zufallswert alleine als einzigem Eingabeparameter,
- Speicherung des synthetischen Fingerabdrucks in dem elektronischen Speicher,
- Senden einer Antwort (23) auf das erste Kommando über die Kommunikationsschnittstelle zur Übertragung des synthetischen Fingerabdrucks,
wobei das erste Kommando zusammen mit einem Nutzercode (4,6) über die Kommunikationsschnittstelle empfangen wird, der Nutzercode eindeutig für die Kombination aus dem Computer und dem Nutzer ist und die Speicherung der Referenzmerkmale und des synthetischen Fingerabdrucks in dem elektronischen Speicher mit dem Nutzercode als Zugriffsschlüssel erfolgt,
und dass aufgrund des Empfangs eines zweiten Kommandos (26) mit dem Nutzercode zur Authentifizierung des Nutzers gegenüber dem Computer mittels Fingerabdruck die folgenden Schritte durchgeführt werden:
- Erfassung des Fingerabdrucks des Nutzers durch den Fingerabdrucksensor,
- Merkmalsextraktion zur Extrahierung von Vergleichsmerkmalen aus dem erfassten Fingerabdruckbild,
- Lesen der Referenzmerkmale aus dem elektronischen Speicher mit dem Nutzercode als Zugriffsschlüssel,
- Prüfung der Vergleichsmerkmale auf Übereinstimmung mit den aus dem Speicher gelesenen Referenzmerkmalen, und nur für den Fall, dass eine solche Übereinstimmung vorliegt, Lesen des synthetischen Fingerabdrucks aus dem Speicher mit dem Nutzercode als Zugriffsschlüssel und Senden einer Antwort (27) auf das zweite Kommando über die Kommunikationsschnittstelle zur Übertragung des synthetischen Fingerabdrucks.

2. Fingerabdruckerfassungsgerät mit
- einem Fingerabdrucksensor (12) zur Erfassung eines Fingerabdruckbildes (19) eines Nutzers (2),
- einem elektronischen Speicher (14),
- einem Zufallsgenerator (16) zur Erzeugung eines Zufallswerts,
- einem deterministischen Fingerabdruckgenerator (17) zur Erzeugung eines synthetischen Fingerabdrucks,
- einer Kommunikationsschnittstelle (10) zur Kommunikation mit einem Computer (1, 5),
- einem Prozessor (13), der zur Durchführung von Programminstruktionen (15, 16, 17, 18) so konfiguriert ist, dass
aufgrund des Empfangs eines ersten Kommandos (20) zur Einrichtung der Authentifizierung des Nutzers gegenüber dem Computer mittels Fingerabdruck die folgenden Schritte durchgeführt werden:
- Erfassung des Fingerabdrucks des Nutzers durch den Fingerabdrucksensor,
- Merkmalsextraktion zur Extrahierung von Referenzmerkmalen (21, 24) aus dem erfassten Fingerabdruckbild,
- Speicherung der Referenzmerkmale in dem elektronischen Speicher,
- Erzeugung eines Zufallswerts mithilfe des Zufallsgenerators,
- Eingabe des Zufallswerts in den Fingerabdruckgenerator,
- Erzeugung eines synthetischen Fingerabdrucks (22, 25) durch den Fingerabdruckgenerator mit nur dem Zufallswert alleine als einzigem Eingabeparameter,
- Speicherung des Zufallswerts in dem elektronischen Speicher,
- Senden einer Antwort (23) auf das erste Kommando über die Kommunikationsschnittstelle zur Übertragung des synthetischen Fingerabdrucks,
wobei das erste Kommando zusammen mit einem Nutzercode (4, 6) über die Kommunikationsschnittstelle empfangen wird, der Nutzercode eindeutig für die Kombination aus dem Computer und dem Nutzer ist und die Speicherung der Referenzmerkmale und des synthetischen Fingerabdrucks in dem elektronischen Speicher mit dem Nutzercode als Zugriffsschlüssel erfolgt,
und dass aufgrund des Empfangs eines zweiten Kommandos (26) mit dem Nutzercode zur Authentifizierung des Nutzers gegenüber dem Computer mittels Fingerabdruck die folgenden Schritte durchgeführt werden:
- Erfassung des Fingerabdrucks des Nutzers durch den Fingerabdrucksensor,
- Merkmalsextraktion zur Extrahierung von Vergleichsmerkmalen aus dem erfassten Fingerabdruckbild,
- Lesen der Referenzmerkmale aus dem elektronischen Speicher mit dem Nutzercode als Zugriffsschlüssel, Prüfung der Vergleichsmerkmale auf Übereinstimmung mit den aus dem Speicher gelesenen Referenzmerkmalen, und nur für den Fall, dass eine solche Übereinstimmung vorliegt, Lesen des Zufallswerts aus dem Speicher mit dem Nutzercode als Zugriffsschlüssel, Erzeugung desselben synthetischen Fingerabdrucks (22, 25) durch den Fingerabdruckgenerator mit nur dem Zufallswert alleine als einzigem Eingabeparameter,
- und Senden einer Antwort (27) auf das zweite Kommando über die Kommunikationsschnittstelle zur Übertragung des synthetischen Fingerabdrucks.

3. Fingerabdruckerfassungsgerät nach Anspruch 2, wobei nur der Zufallswert, nicht der synthetische Fingerabdruck in dem elektronischen Speicher (14) gespeichert wird.

4. Fingerabdruckerfassungsgerät nach einem der vorhergehenden Ansprüche, wobei die Kommunikationsschnittstelle kontaktbehaftet, zum Beispiel als Computerbus, insbesondere USB-Schnittstelle, oder als kontaktlose direkte Kommunikationsschnittstelle, insbesondere als NFC oder Bluetooth Schnittstelle, ausgebildet ist.

5. Fingerabdruckerfassungsgerät nach einem der vorhergehenden Ansprüche, wobei der synthetische Fingerabdruck größer ist als die von dem Fingerabdrucksensor erfassbare Fingerabdruckfläche.

6. Fingerabdruckerfassungsgerät nach einem der vorhergehenden Ansprüche, wobei der Prozessor so konfiguriert ist, dass die Einrichtung der Authentifizierung mittels Fingerabdruck für mehrere Nutzer ermöglicht wird, indem für jeden der Nutzer unter dem jeweiligen Nutzercode als Zugriffsschlüssel in den jeweiligen ersten und zweiten Speicherbereichen des elektronischen Speichers die extrahierten Referenzmerkmale und der symmetrische Fingerabdruck des jeweiligen Nutzers gespeichert werden.

7. Fingerabdruckerfassungsgerät nach einem der vorhergehenden Ansprüche, welches als Dokument ausgebildet ist, insbesondere als Wert- oder Sicherheitsdokument, insbesondere ein ID-Dokument oder hoheitliches Dokument, insbesondere ein papierbasiertes und/oder kunststoffbasiertes Dokument, wie zum Beispiel als elektronisches Ausweisdokument, insbesondere Machine-Readable Travel Document, insbesondere Reisepass, Personalausweis, Visum, Führerschein, Fahrzeugschein, Fahrzeugbrief, Gesundheitskarte oder Firmenausweis oder anderes ID-Dokument oder sonstiger Berechtigungsnachweis oder als Zahlungsmittel, insbesondere Banknote, Bankkarte oder Kreditkarte, oder als Frachtbrief, oder als tragbares elektronisches Gerät, insbesondere als Mobilfunkgerät, insbesondere Smartphone oder tragbarer Computer.

8. System mit zumindest einem ersten Computer (1, 5), welcher jedem Nutzer, der ein Nutzerkonto auf dem ersten Computer hat, einem für die Kombination erster Computer und dem jeweiligen Nutzer einen eindeutigen Nutzercode (4, 7) zuordnet, und der zumindest erste Computer eine Kommunikationsschnittstelle (8, 9) zur Kommunikation mit einem Fingerabdruckerfassungsgerät (11) nach einem der vorhergehenden Ansprüche aufweist, wobei das erste Computersystem so konfiguriert ist, dass das erste Kommando (20) mit dem dem betreffenden Nutzer zugeordneten Nutzercode über die Kommunikationsschnittstelle an das Fingerabdruckerfassungsgerät gesendet wird und von dem Fingerabdruckerfassungsgerät als Antwort (23) hierauf der synthetischen Fingerabdruck empfangen wird, um aus diesem abgeleitete Referenzmerkmale für eine spätere Authentifizierung des betreffenden Nutzers mittels des Fingerabdruckerfassungsgeräts zu speichern.

9. System nach Anspruch 8, wobei der Computer ein Betriebssystem und/oder ein Anwendungsprogramm aufweist, welches die Option zu Authentifizierung des Nutzers mittels Fingerabdruck bietet, und dass das erste Kommando aufgrund der Auswahl dieser Option des Nutzers erzeugt wird.

10. System nach Anspruch 8 oder 9, wobei es sich bei dem Computer um einen Personal Computer, insbesondere einen stationären oder tragbaren Computer, handelt.

11. System nach Anspruch 8 oder 9, wobei es sich bei dem Computer um ein Steuerungsgerät einer Vorrichtung handelt, insbesondere einer Zugangskontrollvorrichtung.

## Claims

1. Fingerprint-capturing device comprising
- a fingerprint sensor (12) for capturing a fingerprint image (19) of a user (2),
- an electronic memory (14),
- a random number generator (16) for generating a random value,
- a fingerprint generator (17) for generating a synthetic fingerprint,
- a communication interface (10) for communicating with a computer (1, 5),
- a processor (13), which is configured for carrying out program instructions (15, 16, 17, 18) such that
upon receipt of a first command (20) for establishing the authentication of the user to the computer by means of a fingerprint, the following steps are carried out:
- capturing the fingerprint of the user using the fingerprint sensor,
- feature extraction for extracting reference features (21, 24) from the captured fingerprint image,
- storing the reference features in the electronic memory,
- generating a random value by means of the random number generator,
- inputting the random value into the fingerprint generator,
- generating a synthetic fingerprint (22, 25) by means of the fingerprint generator using just the random value as the only input parameter,
- storing the synthetic fingerprint in the electronic memory,
- sending a response (23) to the first command via the communication interface for transmitting the synthetic fingerprint,
wherein the first command together with a user code (4, 6) is received via the communication interface, the user code is unique for the combination of the computer and the user, and the reference features and the synthetic fingerprint are stored in the electronic memory with the user code as the access key,
and such that, upon receipt of a second command (26) with the user code for authenticating the user to the computer by means of a fingerprint, the following steps are carried out:
- capturing the fingerprint of the user using the fingerprint sensor,
- feature extraction for extracting comparison features from the captured fingerprint image,
- reading out the reference features from the electronic memory with the user code as the access key,
- checking whether the comparison features match the reference features read out from the memory, and only if they do match, reading out the synthetic fingerprint from the memory with the user code as the access key and sending a response (27) to the second command via the communication interface for transmitting the synthetic fingerprint.

2. Fingerprint-capturing device comprising
- a fingerprint sensor (12) for capturing a fingerprint image (19) of a user (2),
- an electronic memory (14),
- a random number generator (16) for generating a random value,
- a deterministic fingerprint generator (17) for generating a synthetic fingerprint,
- a communication interface (10) for communicating with a computer (1, 5),
- a processor (13), which is configured for carrying out program instructions (15, 16, 17, 18) such that
upon receipt of a first command (20) for establishing the authentication of the user to the computer by means of a fingerprint, the following steps are carried out:
- capturing the fingerprint of the user using the fingerprint sensor,
- feature extraction for extracting reference features (21, 24) from the captured fingerprint image,
- storing the reference features in the electronic memory,
- generating a random value by means of the random number generator,
- inputting the random value into the fingerprint generator,
- generating a synthetic fingerprint (22, 25) by means of the fingerprint generator using just the random value as the only input parameter,
- storing the random value in the electronic memory,
- sending a response (23) to the first command via the communication interface for transmitting the synthetic fingerprint,
wherein the first command together with a user code (4, 6) is received via the communication interface, the user code is unique for the combination of the computer and the user, and the reference features and the synthetic fingerprint are stored in the electronic memory with the user code as the access key,
and such that, upon receipt of a second command (26) with the user code for authenticating the user to the computer by means of a fingerprint, the following steps are carried out:
- capturing the fingerprint of the user using the fingerprint sensor,
- feature extraction for extracting comparison features from the captured fingerprint image,
- reading out the reference features from the electronic memory with the user code as the access key, checking whether the comparison features match the reference features read out from the memory, and only if they do match, reading out the random value from the memory with the user code as the access key, generating the same synthetic fingerprint (22, 25) by means of the fingerprint generator using just the random value as the only input parameter,
- and sending a response (27) to the second command via the communication interface for transmitting the synthetic fingerprint.

3. Fingerprint-capturing device according to claim 2, wherein only the random value, and not the synthetic fingerprint, is stored in the electronic memory (14).

4. Fingerprint-capturing device according to any of the preceding claims, wherein the communication interface is designed to be contact-based, for example as a computer bus, in particular a USB interface, or as a contactless direct communication interface, in particular as NFC or a Bluetooth interface.

5. Fingerprint-capturing device according to any of the preceding claims, wherein the synthetic fingerprint is larger than the fingerprint area that can be captured by the fingerprint sensor.

6. Fingerprint-capturing device according to any of the preceding claims, wherein the processor is configured such that the establishing of the authentication by means of a fingerprint is facilitated for a plurality of users by the extracted reference features and the symmetrical fingerprint of the relevant user being stored for each of the users under the relevant user code as the access key in the respective first and second memory areas of the electronic memory.

7. Fingerprint-capturing device according to any of the preceding claims, which is designed as a document, in particular as a value document or security document, in particular an ID document or official document, in particular a paper-based and/or plastics-based document, such as an electronic identity document, in particular a machine-readable travel document, in particular a passport, an ID card, a visa, a driver's license, a vehicle registration, a vehicle registration document, a health card, or a company ID card or another ID document or other credentials, or as a means of payment, in particular a banknote, bank card or credit card, or as a consignment note, or as a portable electronic device, in particular as a mobile phone, in particular a smartphone or a portable computer.

8. System comprising at least one first computer (1, 5), which assigns a user code (4, 7) that is unique for the combination of the first computer and the relevant user to each user who has a user account on the first computer, and the at least first computer comprises a communication interface (8, 9) for communicating with a fingerprint-capturing device (11) according to any of the preceding claims, wherein the first computer system is configured such that the first command (20) is sent to the fingerprint-capturing device via the communication interface with the user code assigned to the user in question, and the synthetic fingerprint is received by the fingerprint-capturing device as a response (23) thereto in order to store reference features derived therefrom for subsequent authentication of the user in question by means of the fingerprint-capturing device.

9. System according to claim 8, wherein the computer comprises an operating system and/or an application program which provides the option of authenticating the user by means of a fingerprint, and the first command is generated when this option is selected by the user.

10. System according to claim 8 or 9, wherein the computer is a personal computer, in particular a desktop computer or a portable computer.

11. System according to claim 8 or 9, wherein the computer is a controller of a device, in particular of an access-control device.

## Revendications

1. Appareil de détection d'empreintes digitales pourvu
- d'un capteur d'empreintes digitales (12) permettant la détection d'une image d'empreintes digitales (19) d'un utilisateur (2),
- d'une mémoire électronique (14),
- d'un générateur aléatoire (16) permettant la génération d'une valeur aléatoire,
- d'un générateur d'empreintes digitales (17) permettant la création d'une empreinte digitale synthétique,
- d'une interface de communication (10) permettant la communication avec un ordinateur (1, 5),
- d'un processeur (13) qui est conçu pour l'exécution d'instructions de programme (15, 16, 17, 18), de telle manière
qu'en raison de la réception d'une première commande (20) pour la mise en place de l'authentification de l'utilisateur vis-à-vis de l'ordinateur au moyen de l'empreinte digitale, les étapes suivantes sont exécutées :
- la détection de l'empreinte digitale de l'utilisateur par le capteur d'empreintes digitales,
- l'extraction de caractéristiques pour l'extraction de caractéristiques de référence (21, 24) à partir de l'image d'empreintes digitales détectée,
- l'enregistrement des caractéristiques de référence dans la mémoire électronique,
- la création d'une valeur aléatoire à l'aide du générateur aléatoire,
- l'entrée de la valeur aléatoire dans le générateur d'empreintes digitales,
- la création d'une empreinte digitale synthétique (22, 25) par le générateur d'empreintes digitales avec uniquement la valeur aléatoire seule en tant que paramètre d'entrée unique,
- l'enregistrement de l'empreinte digitale synthétique dans la mémoire électronique,
- l'envoi d'une réponse (23) suite à la première commande par le biais de l'interface de communication permettant la transmission de l'empreinte digitale synthétique,
dans lequel la première commande est reçue conjointement avec un code utilisateur (4, 6) par le biais de l'interface de communication, le code utilisateur est spécifique pour la combinaison à base de l'ordinateur et de l'utilisateur et l'enregistrement des caractéristiques de référence et de l'empreinte digitale synthétique a lieu dans la mémoire électronique avec le code utilisateur servant de clé d'accès,
et qu'en raison de la réception d'une deuxième commande (26), les étapes suivantes sont exécutées avec le code utilisateur pour l'authentification de l'utilisateur vis-à-vis de l'ordinateur au moyen de l'empreinte digitale :
- la détection de l'empreinte digitale de l'utilisateur par le capteur d'empreintes digitales,
- l'extraction de caractéristiques permettant l'extraction de caractéristiques de comparaison à partir de l'image d'empreinte digitale détectée,
- la lecture des caractéristiques de référence à partir de la mémoire électronique avec le code utilisateur servant de clé d'accès,
- la vérification des caractéristiques de comparaison en ce qui concerne la concordance avec les caractéristiques de référence lues à partir de la mémoire et, uniquement dans le cas où une telle concordance est présente, la lecture de l'empreinte digitale synthétique à partir de la mémoire avec le code utilisateur servant de clé d'accès et l'envoi d'une réponse (27) suite à la deuxième commande par le biais de l'interface de communication pour la transmission de l'empreinte digitale synthétique.

2. Appareil de détection d'empreintes digitales pourvu
- d'un capteur d'empreintes digitales (12) permettant la détection d'une image d'empreintes digitales (19) d'un utilisateur (2),
- d'une mémoire électronique (14),
- d'un générateur aléatoire (16) permettant la génération d'une valeur aléatoire,
- d'un générateur d'empreintes digitales (17) de détermination permettant la création d'une empreinte digitale synthétique,
- d'une interface de communication (10) permettant la communication avec un ordinateur (1, 5),
- d'un processeur (13) qui est conçu pour l'exécution d'instructions de programme (15, 16, 17, 18), de telle manière
qu'en raison de la réception d'une première commande (20) pour la mise en place de l'authentification de l'utilisateur vis-à-vis de l'ordinateur au moyen de l'empreinte digitale les étapes suivantes sont exécutées :
- la détection de l'empreinte digitale de l'utilisateur par le capteur d'empreintes digitales,
- l'extraction de caractéristiques pour l'extraction de caractéristiques de référence (21, 24) à partir de l'image d'empreintes digitales détectée,
- l'enregistrement des caractéristiques de référence dans la mémoire électronique,
- la création d'une valeur aléatoire à l'aide du générateur aléatoire,
- l'entrée de la valeur aléatoire dans le générateur d'empreintes digitales,
- la création d'une empreinte digitale synthétique (22, 25) par le générateur d'empreintes digitales avec uniquement la valeur aléatoire seule servant de paramètre d'entrée unique,
- l'enregistrement de l'empreinte digitale synthétique dans la mémoire électronique,
- l'envoi d'une réponse (23) suite à la première commande par le biais de l'interface de communication permettant la transmission de l'empreinte digitale synthétique,
dans lequel la première commande est reçue conjointement avec un code utilisateur (4, 6) par le biais de l'interface de communication, le code utilisateur est spécifique pour la combinaison à base de l'ordinateur et de l'utilisateur et l'enregistrement des caractéristiques de référence et de l'empreinte digitale synthétique a lieu dans la mémoire électronique avec le code utilisateur servant de clé d'accès,
et qu'en raison de la réception d'une deuxième commande (26), les étapes suivantes sont exécutées avec le code utilisateur pour l'authentification de l'utilisateur vis-à-vis de l'ordinateur au moyen de l'empreinte digitale :
- la détection de l'empreinte digitale de l'utilisateur par le capteur d'empreintes digitales,
- l'extraction de caractéristique permettant l'extraction de caractéristiques de comparaison à partir de l'image d'empreinte digitale détectée,
- la lecture des caractéristiques de référence à partir de la mémoire électronique avec le code utilisateur servant de clé d'accès, la vérification des caractéristiques de comparaison en ce qui concerne la concordance avec les caractéristiques de référence lues à partir de la mémoire et, uniquement dans le cas où une telle concordance est présente, la lecture de la valeur aléatoire à partir de la mémoire avec le code utilisateur servant de clé d'accès, la création de la même empreinte digitale (22, 25) synthétique par le générateur d'empreintes digitales avec uniquement la valeur aléatoire servant de paramètre d'entrée unique,
- et l'envoi d'une réponse (27) suite à la deuxième commande par le biais de l'interface de communication pour la transmission de l'empreinte digitale synthétique.

3. Appareil de détection d'empreintes digitales selon la revendication 2, dans lequel uniquement la valeur aléatoire, et non l'empreinte digitale synthétique, est enregistrée dans la mémoire électronique (14).

4. Appareil de détection d'empreintes digitales selon l'une des revendications précédentes, dans lequel l'interface de communication est conçue entachée d'un contact, par exemple, sous forme d'un bus informatique, en particulier une interface USB, ou sous forme d'une interface de communication directe sans contact, notamment sous forme d'une interface NFC ou Bluetooth.

5. Appareil de détection d'empreintes digitales selon l'une des revendications précédentes, dans lequel l'empreinte digitale synthétique est plus grande que la surface d'empreinte digitale détectable par le capteur d'empreintes digitales.

6. Appareil de détection d'empreintes digitales selon l'une des revendications précédentes, dans lequel le processeur est conçu de telle façon que le dispositif permet l'authentification au moyen de l'empreinte digitale pour plusieurs utilisateurs, en ce que les caractéristiques de référence extraites et l'empreinte digitale symétrique de l'utilisateur respectif sont enregistrées pour chacun des utilisateurs sous le code utilisateur respectif servant de clé d'accès dans les première et deuxième zones de mémoire respectives de la mémoire électronique.

7. Appareil de détection d'empreintes digitales selon l'une des revendications précédentes, lequel est conçu sous forme de document, en particulier, sous forme de document de valeur ou de sécurité, notamment un document d'ID ou un document de souveraineté, en particulier un document à base de papier et/ou à base d'une matière plastique, comme, par exemple, sous forme d'un document d'identité électronique, notamment un document de voyage lisible par machine, en particulier, un passeport, une carte d'identité, un visa, un permis de conduire, un certificat d'immatriculation de véhicule, un titre de véhicule, une carte de santé ou une carte d'entreprise ou un autre document d'ID ou une autre attestation d'autorisation, ou sous forme de moyen de paiement, notamment de billet de banque, de carte bancaire ou de carte de crédit, ou sous forme d'une lettre de fret, ou sous forme d'appareil électronique portable, notamment d'appareil radio mobile, en particulier de Smartphone ou d'ordinateur portable.

8. Système avec au moins un premier ordinateur (1, 5) lequel associe à chaque utilisateur qui possède un compte utilisateur sur le premier ordinateur, un code utilisateur (4, 7) spécifique pour la combinaison du premier ordinateur et de l'utilisateur en question, et l'au moins un premier ordinateur présente une interface de communication (8, 9) pour la communication avec un appareil de détection d'empreintes digitales (11) selon l'une des revendications précédentes, où le premier système informatique est conçu de telle manière que la première commande (20) est envoyée avec le code utilisateur associé à l'utilisateur en question par le biais de l'interface de communication à l'appareil de détection d'empreintes digitales et l'empreinte digitale synthétique est ensuite reçue par l'appareil de détection d'empreintes digitales sous forme de réponse (23) afin d'enregistrer à partir de celui-ci des caractéristiques de référence pour une authentification ultérieure de l'utilisateur en question au moyen de l'appareil de détection d'empreintes digitales.

9. Système selon la revendication 8, dans lequel l'ordinateur présente un système d'exploitation et/ou un programme d'application, lequel offre l'option pour une authentification de l'utilisateur au moyen de l'empreinte digitale et que la première commande est créée en raison de la sélection de cette option de l'utilisateur.

10. Système selon la revendication 8 ou la revendication 9, dans lequel, dans le cas de l'ordinateur, il s'agit d'un ordinateur personnel, en particulier, un ordinateur stationnaire ou portable.

11. Système selon la revendication 8 ou la revendication 9, dans lequel, dans le cas de l'ordinateur, il s'agit d'un appareil de commande d'un dispositif, en particulier, d'un dispositif de commande d'accès.
